# EUROPÄISCHE PATENTSCHRIFT

(11) **EP 1 438 152 B1**
(45) Veröffentlichungstag und Bekanntmachung des Hinweises auf die Patenterteilung: **12.01.2005**
(21) Anmeldenummer: 02754926.0
(22) Anmeldetag: 23.07.2002
(51) Int. Cl.: B22F 3/10, C04B 35/638

(54) **VERFAHREN ZUR STEUERUNG DES ENTBINDERUNGSPROZESSES BEI MIM- ODER CIM-TEILEN**
METHOD FOR CONTROLLING THE BINDER-RELEASE PROCESS FOR MIM- OR CIM-PIECES
PROCEDE POUR COMMANDER LE PROCESSUS D'EXTRACTION DE LIANT DANS DES PIECES MIM OU CIM

(30) Priorität: 22.10.2001 DE 10151358
(43) Veröffentlichungstag der Anmeldung: 21.07.2004
(73) Patentinhaber: GERO Hochtemperaturöfen GmbH, 75242 Neuhausen (DE)
(72) Erfinder: KRUG, Steffen, 71336 Waiblingen (DE); GEIGER, Roland, 75242 Neuhausen (DE)
(74) Vertreter: Lutz, Johannes Dieter, Dr.
(86) Internationale Anmeldenummer: PCT/EP2002/008172
(87) Internationale Veröffentlichungsnummer: WO 2003/035307

(56) Entgegenhaltungen:
- DE-A- 3 127 066
- US-A- 5 078 929
- US-A- 5 271 877

## Beschreibung

Die Erfindung betrifft ein Verfahren zur Steuerung des in einem Reaktionsraum eines Entbinderungsofens stattfindenden Entbinderungsprozesses bei MIM (Metall Injection Molding)- oder CIM (Ceramic Injection Molding)-Teilen, allgemein von in einem Pulver-Spritzgußverfahren hergestellten PIM (Powder Injection Molding)-Teilen bei denen als Binder - Matrix für metallische oder keramische Füllstoffe - z.B. ein polymerer Kunststoff-verwendet wird, insbesondere Polyacetal, der durch Mitwirkung eines Reaktionspartners, insbesondere Salpetersäure, unter einer geeigneten Prozeßtemperatur sowie unter Spülung des Reaktionsraumes mit einem Schutzgas, z.B. Stickstoff, in seine niedermolekularen - monomeren oder dimeren - in gasförmigem Aggregatszustand anfallenden Bestandteile zersetzbar - "depolymerisiebar" - ist, die durch Abfackeln in umweltverträgliche oxidische Verbindungen umgewandelt werden. Ein Verfahren dieser Art ist durch den Artikel "Pulverspritzguß" von H. J. Mair et al. in der Zeitschrift GAK Gummi, Fasern, Kunststoffe, 50. Jahrgang, April 1997, Seiten 279-282, Dr. Gupta Verlag, 40885 Ratingen, bekannt.

Die Entbinderung - Entfernung der Kunststoff-Matrix - muß quantitativ sein, damit die PIM-Teile durch eine nachfolgende Sinter-Behandlung die für ihren Bestimmungszweck erforderliche Qualität erreichen können.

Es muß auch sichergestellt sein, daß alle Teile einer dem Entbinderungsprozeß zu unterwerfenden Charge, die eine Vielzahl von PIM-Teilen umfassen kann, vollständig entbindert sind, damit die Charge nicht unter Gesichtspunkten der Qualitätskontrolle schon verworfen werden muß, bevor sie der Sinterbehandlung als nächster Bearbeitungsstufe unterworfen werden kann.

Um die erforderliche - quantitative - Entfernung der Kunststoffmatrix der PIM-Teile sicher zu stellen, wird in der Regel so vorgegangen, dass nach Ermittlung einer für die jeweiligen Teile und Chargen erforderlichen Behandlungszeit die für die Entbinderungsbehandlung geeigneten Prozeßbedingungen wesentlich länger aufrechterhalten bleiben und eine entsprechende Verlängerung des Entbinderungsbetriebes hingenommen wird, als es für eine quantitative Entbinderung erforderlich wäre, wodurch zwar der Verlust einer Charge vermieden werden kann, jedoch erhebliche Betriebskosten in Kauf genommen werden müssen, die z.B. aus einem hohen Verbrauch von Schutzgas für die Spülung des Depolymerisationsofens, die längere Zufuhr des Reaktionspartners sowie die Zeitbelastung der Anlage bedingt sind.

Da die Entbinderungszeit von der Größe und Form der PIM-Teile in erheblichem Umfang abhängig ist, müssen zur Ermittlung der Entbinderungszeit, einschließlich der Sicherheitszeitspanne aufwendige Vorversuche unternommen werden, die ihrerseits zeit- und kostenaufwendig sind und meist mit dem Verlust von Versuchschargen verknüpft sind, deren Qualität für eine weitere Verarbeitung unzureichend ist.

Aufgabe der Erfindung ist es daher, ein Verfahren der eingangs genannten Art anzugeben, das eine sichere Prozeßführung dahingehend ermöglicht, daß der Entbinderungsprozeß nicht zu früh abgebrochen wird und gleichwohl mit vergleichsweise kurzen Entbinderungszeitspannen gearbeitet werden kann, sowie eine zur Durchführung des Verfahrens geeignete Anlage anzugeben.

Diese Aufgabe wird - hinsichtlich des Verfahrens - durch die kennzeichnenden Merkmale des Patentanspruchs 1 und in Ausgestaltungen desselben durch die Unteransprüche 2 bis 4 und hinsichtlich der Anlage durch die Merkmale der Ansprüche 5 und 6 gelöst.

Hiernach wird unter definiert einstellbaren Werten der Reaktionstemperatur T, im Ofen sowie der Zuführungsrate V des Reaktionspartners fortlaufend oder periodisch intervallweise die Temperatur im Verbrennungsraum der Fackel überwacht, und es wird nach einem Absinken der Fackeltemperatur auf einen unteren Grenzwert Tfs, der mindestens und annähernd derjenigen Temperatur Tf im Brennraum der Fackel entspricht, die sich unter stationären Betriebsbedingungen des Entbinderungsofens ergibt, solange der Entbinderungsprozeß noch nicht eingeleitet ist, die Beendigung des Entbinderungsprozesses eingeleitet und spätestens nach Ablauf einer relativ kurzen Sicherheitszeitspanne, die klein gegen die Entbinderungszeit insgesamt ist, der Entbinderungsprozeß beendet, vorzugsweise dadurch, daß die Reaktionspartner-Zufuhr zum Reaktionsraum des Entbinderungsofens beendet wird.

Basierend auf der Erkenntnis, daß die Temperatur im Brennraum der Fackel oder einer Begrenzungswand desselben als Folge der durch die Verbrennung der Zersetzungsprodukte freigesetzten Wärme ein geeignetes Maß für die Menge anfallenden Zersetzungsprodukte ist, wird diese Temperatur erfindungsgemäß zur Prozeßsteuerung, insbesondere zu einer situationsgerechten Beendigung des Depolymerisierungsprozesses genutzt, wodurch zumindest die folgenden Vorteile erzielt werden:

Es wird auf einfache Weise sichergestellt, daß der Depolymerisierungsprozess nicht zu früh beendet wird, da dessen Beendigung erst eingeleitet wird, nachdem ein Betriebszustand erreicht ist, erkennbar an dem stationären Wert der Fackeltemperatur, der einem "Referenz"-Zustand entspricht, der z.B. vor Beginn des Einleitens des Reaktionspartners in dem Entbinderungsofen eingestellt und erfaßt worden ist, d.h. dem stationären Betriebszustand des Entbinderungsofens entspricht, wenn Depolymerisationsprodukte noch nicht bzw. nicht mehr vorhanden sind.

Da die erfindungsgemäße Art der Prozeßsteuerung unabhängig vom Matrixmaterial der PIM-Teile, deren Form und Größe und auch unabhängig von der Größe einer Charge, die zu entbindem ist, zuverlässig zu einer vollständigen Entbinderung führt, können auch zeitaufwendige Vorversuche zur Ermittlung einer geeigneten Entbinderungszeit entfallen und insoweit erhebliche Kosten angespart werden. Eine aus Gründen der Qualitätssicherung gleichwohl als zweckmäßig erscheinende Sicherheitszeitspanne, für die die Entbinderungsanlage über den Zeitpunkt hinaus, zu dem von einer vollständigen Entbinderung ausgegangen werden kann, noch im "Entbinderungs"-Betrieb gehalten wird, kann ohne weiteres in dem durch die Merkmale des Anspruchs 3 angegebenen zeitlichen Rahmen gehalten werden, was im Ergebnis zu einer gegenüber bekannten Verfahrensweisen signifikanten Erniedrigung der Entbinderungszeiten führt, die für ein quantitatives Entbindem benötigt werden.

Eine "zusätzliche", die Betriebskosten der Anlage senkende Verkürzung der Entbinderungszeit ist auch durch ein Vorgehen gemäß den Merkmalen des Anspruchs 4 erreichbar.

Eine zur Durchführung des erfindungsgmäßen Verfahrens geeignete Entbinderungsanlage gemäß den Merkmalen des Anspruchs 5 erfordert, verglichen mit einer konventionellen Anlage nur einen geringen Zusatzaufwand, der durch die Einfügung des Temperatursensors, in der Regel eines Thermoelements, in die Fackel-Konstruktion und die geeignete Programmierung einer zur verfahrensgemäßen Auswertung des Sensor-Ausgangssignals geeigneten elektronischen Steuereinheit bedingt ist, im Vergleich zu den für die Gesamtanlage aufzuwendenden Investitionskosten jedoch marginal ist.

Die gemäß Anspruch 6 vorgesehene Auslegung dieser elektronischen Steuereinheit ermöglicht eine gleichsam selbst-adaptive, automatische Führung des Entbinderungsprozesses im Sinne einer effektiven Verkürzung der erforderlichen Entbinderunszeiten.

Weitere Einzelheiten der Erfindung ergeben sich aus der nachfolgenden Beschreibung des Aufbaus und der Funktion einer erfindungsgemäßen Entbinderungsanlage anhand der Zeichnungen. Es zeigen:
- Fig. 1: den Aufbau einer erfindungsgemäßen Entbinderungsanlage in schematisch vereinfachter Darstellung ihrer Funktionskomponenten;
- Fig. 2: ein Temperatur/Zeit-Diagramm zur Erläuterung eines Verfahrens zum Betrieb der Anlage gemäß Fig. 1.

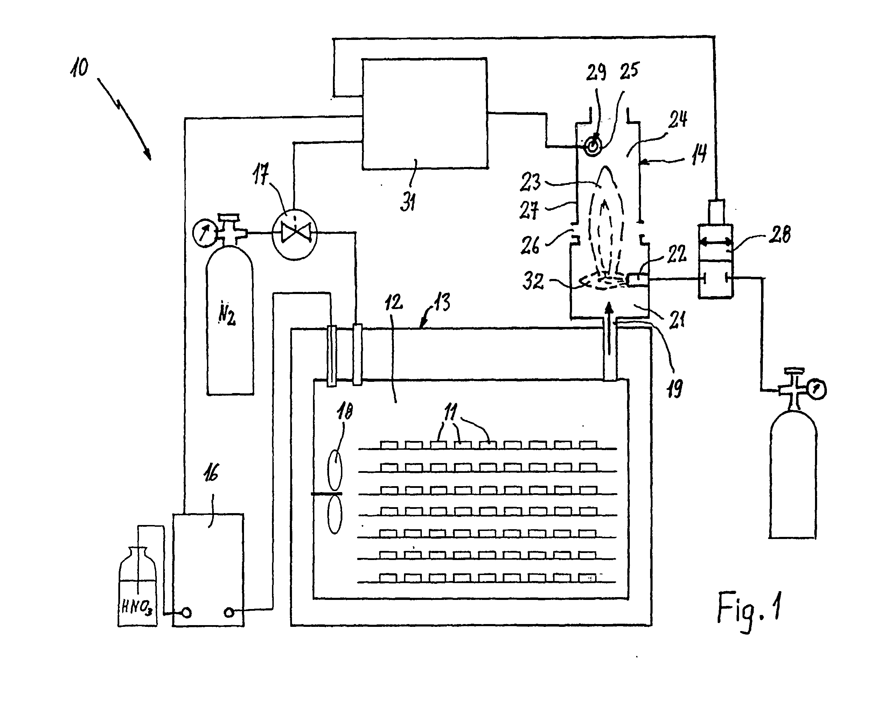

Die in der Fig. 1 insgesamt mit 10 bezeichnete Entbinderungsanlage ist dafür gedacht, in einem Pulver-Spritzgußverfahren (PIM-Powder-Injection-Molding) realisierte CIM (Ceramic Injection Molding) - oder MIM (Metall Injection Molding) - Teile zu entbindern.

"Entbindern" bedeutet, daß eine aus einem polymeren Kunststoff bestehende Matrix, die die Herstellung der genannten Teile in einem Spritzgußvefahren ermöglicht hat und die Metall- bzw. Keramikteile in einer relativ dichten Packung enthält, quantitativ entfernt werden soll, bevor die "reinen" Keramik- bzw. Metallteile einer z.B. sinternden Nachbearbeitung unterwerfen werden, durch die sie erst ihre endgültige dem Keramik- oder Metall-Material weitgehend entsprechenden Eigenschaften erhalten, derart, daß das spezifische Gewicht der "fertigen" Teile nahezu dem spezifischem Gewicht des jeweils verwendeten Metalls oder der jeweiligen Keramik entspricht.

Zum Zweck der Erläuterung sei vorausgesetzt, daß die zu entbindemden, in dem Pulver-Spritzgußverfahren hergestellten Bauteile 11 unter Verwendung eines Polyacetals als Matrix-Material hergestellt worden sind, das durch den Entbinderungsprozeß entfernt werden soll.

Die Entbinderung erfolgt in einem Reaktionsraum 12 eines insgesamt mit 13 bezeichneten Entbinderungsofens, in dem mittels einer - nicht dargestellten - Heizeinrichtung des Ofens 13 eine Reaktionstemperatur Tᵣ eingestellt wird, die einen typischen Wert zwischen 110 und 120 °C hat, und in den als Reaktionspartner hochkonzentrierte Salpetersäure eingebracht wird, die mit dem Matrixmaterial im Sinne einer Depolymerisierung desselben reagiert, derart, daß als Endprodukte dieser Reaktion monomere und dimere Bestandteile des Matrixmaterials in gasförmigen Zustand anfallen, die in einer insgesamt mit 14 bezeichneten Fackel verbrannt werden. Während des Entbinderungsprozesses wird der Reaktionsraum 12 des Entbinderungsofens ständig mit Stickstoff als Schutzgas gespült.

Zur Einleitung der Salpetersäure in den Reaktionsraum 12 ist eine lediglich schematisch dargestellte, z.B. als Membranpumpe ausgebildete Dosierpumpen 16 vorgesehen, mittels derer in einer typischen Auslegung der Anlage 10 Salpetersäure in einer einem Volumenstrom von 30 bis 120 ml/h entsprechenden Menge dem Reaktionsraum 12 zuführbar ist. Die Förderleistung der Dorsierpumpe 16 ist elektrisch steuerbar.

Die Schutzgas-Spülung erfolgt über ein ebenfalls elektrisch ansteuerbares Durchfluß-Mengen-Regelventil 17, wobei typische Werte des Stickstoff-Volumenstromes zwischen 500 und 1500 l/h betragen.

Die vorgenannten Grenzwerte für den Salpeter-Säure-Volumenstrom und den Schutzgas-Volumenstrom gelten für den Fall, daß das Volumen des - im wesentlichen quaderförmigen - Reaktionsraumes 12 Werte zwischen 40 l und 120 l hat.

Um eine möglichst homogene Verteilung der Salpetersäure in dem Reaktionsraum 12 zu erzielen, ist ein Ventilator 18 vorgesehen, der für eine gleichmäßige Verteilung und Verwirbelung des Prozeßgases im Reaktionsraum 12 sorgt, derart, daß sämtliche Bauteile im wesentlichen identischen Reaktionsverhältnissen ausgesetzt sind.

Die durch die Depolymerisierungsreaktion entstehenden - gesundheitsschädlichen - Reaktionsprodukte werden in der Fackel 14 durch Verbrennen in oxidische Stoffe umgewandelt, die unbedenklich in die Atmosphäre abgeben werden können.

Die Fackel 14 ist bei dem zur Erläuterung gewähltem, speziellen Ausführungsbeispiel "vertikal" stehend an der Oberseite des Entbinderungsofens 13 angeordnet, aus dessen Reaktionsraum 12 das die niedermolekularen Depolymerisationsprodukte enthaltende Prozeßgas über die Abgasleitung 19 des Entbinderungsofens 13 "von unten her" in einen Zündraum 21 der Fackel 14 eingeleitet ist, in dem ein Zündbrenner 22 angeordnet ist, der eine den Abgasstrom entflammende Zündflamme 32 erzeugt, die den Abgasstrom entflammt, dessen gestrichelt angedeutete Brennflamme 23 im wesentlichen in einem oberhalb des Zündraumes 21 angeordneten Brennraum 24 der Fackel 14 brennt, in den durch Öffnungen 26 des der Grundform nach zylindrisch-rohförmigen Fackelmantels 27 die Verbrennung des Abgases fördernde Luft nachströmen kann.

Die Brenngas-Zuführung zu dem Zündbrenner 22, der üblicherweise kontinuierlich brennt, ist mittels eines Umschaltventils 28 elektrisch gesteuert absperrbar. In der Fackel 14 ist ein Temperatursensor 29 installiert, der ein für die Temperatur im Brennraum der Fackel 14 charakteristisches elektrisches Ausgangssignal erzeugt, das ein zuverlässiges Maß für die Temperatur im Brennraum 24 der Fackel 14 ist.

Als Temperatursensor 29 ist ein Thermoelement des Typs "K" (Chrom-Nickel-Element) gewählt, das in ein frei in den Brennraum 24 der Fackel 14 hineinragendes hochtemperaturfestes Keramik-Röhrchen 25 eingesetzt ist.

Das Keramikröhrchen 25 verleiht dem Temperatursensor 29 eine durch die Dimensionierung des Röhrchens geeignet vergebbare "thermische" Trägheit gegen kurzzeitige Schwankungen der Gastemperatur im Brennraum 24, so daß das Ausgangssignal des Temperatursensors 29 im Ergebnis einem über eine geeignete Meßzeitspanne hinweg gemittelten Wert der Temperatur im Brennraum 24 entspricht und ein für die Verarbeitung des Temperatursensor-Ausgangssignals günstigeres Signal-/Rausch-Verhältnis erreicht wird.

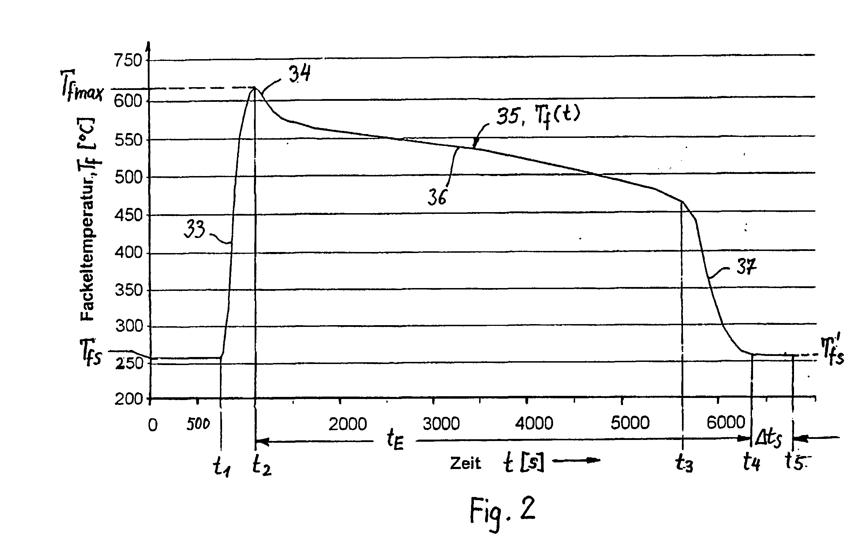

Im Verlauf eines typischen, mittels der Anlage 10 durchführbaren Entbinderungsprozesses ergibt sich der aus der Fig. 2, auf deren Einzelheiten nunmehr Bezug genommen sei, ersichtliche Zeitverlauf der mittels des Temperatursensors 29 erfaßten "Fackel"-Temperatur T_{f}.

Nachdem das durch die Bauteile 11 repräsentierte Entbinderungsgut in den Reaktionsraum 12 des Entbinderungsofens 13 eingebracht ist, wird der Entbinderungsofen 13 unter Spülung mit Schutzgas (N₂) auf die Reaktionstemperatur aufgeheizt, bis ein stationärer Wert dieser Temperatur erreicht ist. Während dieser Anheizphase ist auch schon der Zündbrenner 22 in Betrieb, so daß sich auch in der Fackel 14 ein stationärer Wert der mittels des Temperatursensors 29 überwachten Fackeltemperatur ergibt.

Sobald dieser "Sockel"-Wert hinreichend stationär ist, was im Zeitpunkt t₁ des Diagramms der Fig. 2 der Fall sein möge, wird, ausgelöst durch ein elektrisches Ausgangssignal einer elektronischen Steuereinheit 31, der als Eingangssignal das temperaturcharakteristische Ausgangssignal des Temperatursensors 29 zugeleitet ist, die Dosierpumpe 16 aktiviert und dadurch Salpetersäure in der prozeßgerechten Fördermenge V in den Reaktionsraum 12 des Entbinderungsofens 13 eingeleitet. Durch den ab diesem Zeitpunkt t₁ einsetzenden Depolymerisationsprozeß fällt als Depolymerisationsprodukt im wesentlichen Formaldehyd an, das nunmehr, entzündet durch die Zündflamme 32 des Zündbrenners 22 im wesentlichen in dem Brennraum 24 der Fackel 14 abgefackelt wird. Dadurch ergibt sich, repräsentiert durch den steil ansteigenden Ast 33 der insgesamt mit 35 bezeichneten T/t-Verlaufskurve ein Anstieg der "Fackel"-Temperatur T_{f}, der bis zu einem Maximalwert T_{fmax} der Fackeltemperatur führt, der im Zeitpunkt t₂ erreicht wird. Unmittelbar nach Erreichen dieses Maximalwertes T_{fmax} der Fackeltemperatur sinkt diese, wie durch den unmittelbar auf das Temperaturmaximum folgenden steil abfallenden Ast 34 der Verlaufskurve 35 repräsentiert zunächst relativ rasch ab, um danach mit geringerer Rate abzufallen, wie durch den sich über den größten Teil der Entbinderungszeit erstreckenden flach abfallenden Ast 36 der Verlaufskurve 35 repräsentiert.

Dieser "flache" Abfall der Fackeltemperatur T_{f} ergibt sich daraus, daß mit zunehmender Dauer des Entbinderungsprozesses kontinuierlich weniger Depolymerisations-Endprodukte anfallen, die in der Fackel 14 verbrannt werden, mit der Folge, daß die Fackeltemperatur entsprechend abnimmt.

Ein etwa im Zeitpunkt t₃ einsetzender, rascherer Abfall der Fackeltemperatur T_{f}, der durch den "steiler" abfallenden Ast 37 der T/t-Verlaufskurve 35 repräsentiert ist, ist ein Indiz hoher Wahrscheinlichkeit dafür, daß zu dem Zeitpunkt t3 ein weitaus überwiegender Teil der Matrix der PIM-Teile depolymerisiert ist, d.h. die Menge der noch anfallenden Depolymerisationsprodukte, die in der Fackel verbrannt werden, drastisch abgenommen hat und demgemäß die Brennflamme 23 der Fackel als Wärmequelle sich zu erschöpfen beginnt, mit der Folge, daß die mittels des Temperatursensors 29 erfaßte "Fackel"-Temperatur entsprechend rascher abzusinken beginnt. Nachdem das Matrix-Material vollständig depolymerisiert und verbrannt ist, erlischt die Brennflamme 23, und es ist als Wärmequelle nur noch die aus einem Propan-Reservoir gespeiste Zündflamme 32 wirksam die, für sich alleine gesehen, lediglich ausreicht, die mittels des Sensors 29 überwachte Fackel-Temperatur - stationär - auf dem Wert T_{fs} zu halten.

Sobald die mittels Sensors 29 überwachte Temperatur zumindest annähernd auf diesen Wert T_{fs} abgefallen ist oder auf einen allenfalls geringfügig höheren Wert T'_{fs} abgefallen ist, was im Zeitpunkt t₄ des Diagramms der Figur 2 der Fall ist, und danach praktisch konstant bleibt, so ist dies ein zuverlässiges Indiz dafür, daß der Depolymerisationsprozeß abgeschlossen ist und demgemäß die PIM - Teile 11 entbindert sind und der Entbinderungsbetrieb beendet werden kann.

Um sicher zu gehen, daß die gesamte Charge vom PIM-Teilen 12 vom Matrix-Material befreit ist, kann es zweckmäßig sein, den für den Depolymerisationsvorgang erforderlichen Betriebszustand des Enbinderungsofens - Zufuhr von Salpetersäure und Einhaltung der Reaktionstemperatur im Reaktionsraum 12 -, aus Sicherheitsgründen noch für eine relativ kurze Zeitspanne Δt über den Zeitpunkt t₄ hinaus aufrecht zu erhalten, um gleichsam absolute Sicherheit dafür zu gewinnen, daß das Matrix-Material der PIM-Teile 11 vollständig entfernt ist, wonach im Zeitpunkt t₅ des Diagramms der Figur 2 der Entbinderungsbetrieb durch Abschalten der Salpetersäurezufuhr beendet und die entbinderten Teile 11 zur weiteren Behandlung aus dem Ofen 13 entnommen werden können.

Hierbei ist anhand von Versuchen ermittelt worden, daß eine Sicherheitszeitspanne Δtₛ von 5 % bis 10 % der Entbinderungszeit t_{E}, d.h. der Zeitspanne die zwischen dem Erreichen der Maximaltemperatur T_{fmax} und dem Absinken der Fackeltemperatur T_{f} auf dem stationären Wert T'_{fs} verstreicht, ausreichend ist um mit hinreichender Sicherheit davon ausgehen zu können, daß die erforderliche Qualität der entbindert PIM-Teile 11 erreicht ist.

In einer zweckmäßigen Ausführung der Anlage 10 ist deren elektronische Steuereinheit 31 dahingehend ausgelegt - "programmiert" daß die Zuführungsrate von Salpetersäure zum Reaktionsraum 12 mittels der Förderpumpe 16 so gesteuert wird, daß die mittels des Temperatursensors 29, erfaßte Fackeltemperatur, nachdem diese ihren Maximalwert erreicht hat oder gegenüber diesem wieder nur geringfügig abgesunken ist, auf einen konstanten Wert geregelt wird, womit, entsprechend dem Fortschreiten des Depolymerisierungsprozesses, eine Zunahme der Reaktionspartner-Einspeisung einhergeht. Die Einleitung einer Beendigung des Entbinderungsprozesses erfolgt bei dieser Art der Steuerung dann zweckmäßigerweise so, daß ab dem Zeitpunkt, zu dem ein Schwellenwert der Reaktionspartner-Zuführungsrate überschritten ist, die Weiterführung und Beendigung des Depolymerisationsprozesses analog zu der anhand der Fig. 2 erläuterten Art erfolgt.

Eine zweckmäße Auslegung der elektronischen Steuereinheit 31 kann auch darin bestehen, daß die Prozeßführung im Sinne eines programmierbar vorgegebenen Temperatur/Zeitprofils erfolgt und die Beendigung des Depolymerisationsprozeßes wiederum erst einsetzt, nachdem die zur Verfolgung des Temperatur/Zeit-Profils erforderliche Reaktionspartner-Menge pro Zeiteinheit einen vorgegebenen Schwellenwert überschritten hat.

## Patentansprüche

1. Verfahren zur Steuerung des in einem Reaktionsraum eines Entbinderungsofens stattfindenden Entbinderungsprozesses bei MIM-(Metal Injection Molding)- oder CIM-(Ceramic Injection Molding)-Teilen, bei denen als Binder z.B. ein polymerer Kunststoff verwendet wird, der durch Mitwirkung eines Reaktionspartners, unter einer geeigneten Prozeßtemperatur sowie unter Spülung des Reaktionsraumes mit einem Schutzgas, in seine niedermolekularen in gasförmigem Aggregatzustand anfallenden Bestandteile zersetzbar ist, die durch Abfackeln in oxidische Verbindungen umgewandelt werden, **dadurch gekennzeichnet, daß** unter definiert einstellbaren Werten der Prozeßparameter Tᵣ ( Reaktionstemperatur ) und V (Zuführungsrate) des Reaktionspartners fortlaufend oder periodisch intervallweise die Temperatur T_{f} im Verbrennungsraum der Fackel überwacht wird, und daß nach Absinken der Fackeltemperatur auf einen unteren Grenzwert T_{fs}, die Beendigung des Entbinderungsprozesses eingeleitet und spätestens nach Ablauf einer Sicherheitszeitspanne Δt, innerhalb derer eine für den Entbinderungsvorgang geeignete Kombination der Parameterwerte Tᵣ und V aufrechterhalten bleibt, der Entbinderungsprozeß beendet wird, wobei der untere Grenzwert T'_{fs} mindestens und annähernd dem Wert T_{fs} entspricht, der sich unter stationären Betriebsbedingungen des Entbindesungssystems ergibt, solange der Depolymerisierungsprozeß noch nicht eingeleitet ist.

2. Verfahren nach Anspruch 1, **dadurch gekennzeichnet, daß** die Beendigung des Entbinderungsprozesses durch gesteuerte Beendigung der Reaktionspartner-Zufuhr zum Reaktionsraum (12) erfolgt.

3. Verfahren nach Anspruch 1 oder Anspruch 2, **dadurch gekennzeichnet, daß** die Sicherheitszettspanne Δtₛ nach deren Ablauf die Reaktionspartner-Zufuhr abgesperrt wird, einem kleineren Bruchteil von z.B. 5 % bis 10 % der Entbinderungs-Zeit t_{E} entspricht, die zwischen dem Erreichen eines Maximalwertes T_{fmax} der Fackeltemperatur, der signifikant höher ist als die Sockeltemperatur und dem Zeitpunkt verstreicht, zu dem die Fackeltemperatur wieder auf die Sockeltemperatur abgefallen ist.

4. Verfahren nach einem der Ansprüche 1 bis 3, **dadurch gekennzeichnet, daß** in einer Endphase des Entbinderungsprozesses, in der die Fackeltemperatur relativ rasch absinkt, die Zufuhr V des Reaktionspartners wieder erhöht wird, bis die Fackeltemperatur mindestens annähernd auf die Sockeltemperatur T_{fs} abgefallen ist.

5. Anlage zum Entbindem von in einem Pulver-Spritzgußverfahren hergestellten MIM- oder CIM-Teilen, mit mindestens den folgenden AnlagenKomponenten:
a) einem Entbinderungsofen (13), in dem die MIM- bzw. CIM-Teile auf eine definierte Prozeßtemperatur Tₚ aufheizbar sind,
b) einer Fördereinrichtung (16) für die Einführung eines zur Entbinderung - Depolymerisierung der Kunststoffmatrix der MIM- bzw. CIM-Teile-geeigneten Reaktionspartners,
c) einer Fackel (14) zum Verbrennen in dem Reaktionsraum (12) in gasförmigem Aggregatzustand anfallender Zersetzungsprodukte des Binder-Materials in einer Oxidationskammer (24) der Fackel,
d) einer Heizeinrichtung (22) zur Aufheizung der Brennkammer der Fackel auf mindestens die Flammtemperatur des der Verbrennung unterworfenen Gasgemisches sowie mit
e) einer Schutzgas-Einblaseinrichtung (17) zur definierten Einleitung von Schutzgas (N₂) in den Reaktionsraum des Entbinderungsofens,
zur Durchführung des Verfahrens gemäß einem der Ansprüche 1 bis 4, **dadurch gekennzeichnet, daß** ein Temperatur-Sensor (29) vorgesehen ist, der ein für die Temperatur in der Oxidationskammer (24) der Fackel (14) charakteristisches elektrisches Ausgangssignal erzeugt, und daß dieses Ausgangssignal einer elektronischen Steuereinheit (31) zugeleitet ist, die aus einer Verarbeitung dieses Signals im Sinne einer vorgegebenen, programmgesteuerten Prozeßführung Ansteuersignale für die Fördereinrichtung (16) für die Zuführung des Reaktionspartners zum Reaktionsraum (12) des Entbinderungsofens (13) sowie zur Beendigung der Reaktionspartner-Zufuhr V generiert.

6. Anlage nach Anspruch 5, **dadurch gekennzeichnet, daß** die elektronische Steuereinheit (31) durch Steuerung der Reaktionspartner-Zufuhr zum Reaktionsraum (12) des Entbinderungsofens (13) eine Regelung der Fackeltemperatur T_{f} auf einen konstanten Wert oder im Sinne der Verfolgung eines vorgegebenen Temperatur/Zeitprofils T_{f}(t) vermittelt und eine gesteuerte Beendigung des Depolymerisierungsprozeßes einleitet, wenn der zur Aufrechterhaltung eines jeweils vorgegebenen Wertes der Fackeltemperatur eingesteuerte Reaktionspartner-Zustrom einen vorgegebenen Schwellenwert überstreitet.

## Claims

1. A process for controlling the debindering process which proceeds in the reaction chamber of a debindering furnace in the case of MIM (metal injection moulding) or CIM (ceramic injection moulding) parts, in which a for example polymeric plastic is used as a binder, which plastic may be decomposed with the assistance of a reactant at a suitable process temperature and with purging of the reaction chamber with a protective gas into its low molecular weight constituents in the gaseous state of aggregation, which constituents may be flared off to yield oxidic compounds, **characterised in that** with specifically adjustable values of the process parameters Tᵣ (reaction temperature) and V (feed rate) of the reactant, the temperature T_{f} in the combustion chamber of the flare is monitored continuously or periodically at intervals, and once the flare temperature has fallen to a lower limit value T_{fs}, termination of the debindering process is initiated and, at the latest once a safety period Δt has elapsed, during which period a combination of the parameter values Tᵣ and V suitable for the debindering process is maintained, the debindering process is terminated, wherein the lower limit value T'_{fs} at least and approximately corresponds to the value T_{fs} which is obtained under steady-state operating conditions of the debindering system, insofar as the debindering process has not yet begun.

2. A process according to claim 1, **characterised in that,** the debindering process is terminated by controlled termination of reactant supply to the reaction chamber (12).

3. A process according to claim 1 or claim 2, **characterised in that,** the safety period Δtₛ, after which the reactant supply is shut off, corresponds to a relatively small fraction, for example 5% to 10%, of the debindering time t_{E}, which elapses between when a maximum value T_{fmax} of the flare temperature is reached, which is significantly higher than the baseline temperature, and the time at which the flare temperature has declined again to the baseline temperature.

4. A process according to any one of claims 1 to 3, **characterised in that** in a final phase of the debindering process, in which the flare temperature is declining relatively quickly, the supply V of the reactant is again increased until the flare temperature has declined at least approximately to the baseline temperature T_{fs}.

5. An installation for debindering MIM or CIM parts produced in a powder injection moulding process, with at least the following installation components:
a) a debindering furnace (13), in which the MIM or CIM parts may be heated to a defined process temperature Tₚ,
b) a delivery apparatus (16) for the introduction of a reactant suitable for debindering - polymerisation of the plastics matrix of the MIM or CIM parts,
c) a flare (14) for combusting, in an oxidation chamber (24) of the flare, decomposition products of the binder material which arise in the gaseous state of aggregation in the reaction chamber (12),
d) a heating unit (22) for heating the combustion chamber of the flare to at least the flash point of the gas mixture subjected to combustion and with
e) a protective gas injection apparatus (17) for the defined introduction of protective gas (N₂) into the reaction chamber of the debindering furnace,
for the performance of the process according to any one of claims 1 to 4, **characterised in that** a temperature sensor (29) is provided, which produces an electrical output signal which is characteristic of the temperature in the oxidation chamber (24) of the flare (14), and **in that** this output signal is supplied to an electronic control unit (31), which, by processing this signal for the purposes of predetermined, programmed process control, generates actuation signals for the delivery apparatus (16) for supply of the reactant to the reaction chamber (12) of the debindering furnace (13) and for terminating the supply of reactant V.

6. An installation according to claim 5, **characterised in that,** by controlling the supply of reactant to the reaction chamber (12) of the debindering furnace (13), the electronic control unit (31) controls the flare temperature T_{f} to a constant value or causes it to follow a predetermined temperature/time profile T_{f}(t) and initiates controlled termination of the depolymerisation process when the feed rate of the reactant, which is being controlled to maintain a particular predetermined value of the flare temperature, exceeds a predetermined threshold value.

## Revendications

1. Procédé de commande du processus de déliantage ou d'extraction de liant ayant lieu dans une chambre de réaction d'un four de déliantage sur des pièces MIM (Metal Injection Moulding) ou CIM (Ceramic Injection Moulding) pour lesquelles on utilise comme liant par exemple un plastique polymère qui, en présence d'un agent de réaction, à une température de processus appropriée et moyennant balayage de la chambre de réaction avec un gaz inerte, est décomposable en ses constituants de faible poids moléculaire à l'état gazeux, lesquels sont transformés par brûlage à la torche en composés oxydiques, **caractérisé par le fait que**, moyennant des valeurs réglables de manière définie des paramètres du processus Tᵣ (température de réaction) et V (vitesse d'amenée) de l'agent de réaction, on surveille en continu ou périodiquement par intervalles la température T_{f} dans la chambre de combustion de la torche et que, après une baisse de la température de la torche à une valeur limite inférieure T_{fs}, on amorce l'arrêt du processus de déliantage et, au plus tard à l'expiration d'un délai de sécurité Δt pendant lequel une combinaison appropriée au processus de déliantage des valeurs des paramètres Tᵣ et V est maintenue, on arrête le processus de déliantage, la valeur limite inférieure T'_{fs} correspondant au moins et approximativement à la température T_{fs} dans la chambre de combustion de la torche qui est obtenue dans des conditions de fonctionnement stationnaires du système de déliantage tant que le processus de dépolymérisation n'est pas encore amorcé.

2. Procédé selon la revendication 1, **caractérisé par le fait que** l'arrêt du processus de déliantage est réalisé par arrêt commandé de l'amenée d'agent de réaction dans la chambre de réaction (12).

3. Procédé selon la revendication 1 ou 2, **caractérisé par le fait que** le délai de sécurité Δt à l'expiration duquel on arrête l'amenée d'agent de réaction correspond à une petite fraction de p. ex. 5 % à 10 % du temps de déliantage t_{E} qui s'écoule entre l'atteinte d'une valeur maximale T_{fmax} de la température de la torche, qui est significativement plus élevée que la température de base, et l'instant où la température de la torche est retombée à la température de base.

4. Procédé selon l'une des revendications 1 à 3, **caractérisé par le fait que** dans une phase finale du processus de déliantage, dans laquelle la température de la torche baisse relativement vite, on augmente de nouveau l'amenée V d'agent de réaction jusqu'à ce que la température de la torche soit retombée au moins approximativement à la température de base T_{fs}.

5. Installation pour le déliantage ou l'extraction de liant de pièces MIM ou CIM réalisées par moulage par injection de poudres, comprenant au moins les composants suivants :
a) un four de déliantage (13) dans lequel les pièces MIM ou CIM peuvent être chauffées à une température de processus Tₚ définie,
b) un dispositif de transport (16) pour l'introduction d'un agent de réaction approprié au déliantage - dépolymérisation de la matrice plastique des pièces MIM ou CIM -,
c) une torche (14) pour le brûlage dans une chambre d'oxydation (24) de la torche des produits de décomposition du matériau du liant formés à l'état gazeux dans la chambre de réaction (12),
d) un dispositif de chauffage (22) pour le chauffage de la chambre de combustion de la torche au moins à la température de flamme du mélange gazeux soumis au brûlage et
e) un dispositif d'injection de gaz inerte (17) pour l'introduction définie de gaz inerte (N₂) dans la chambre de réaction du four de déliantage
pour la réalisation du procédé selon l'une des revendications 1 à 4, **caractérisée par le fait qu'**il est prévu une sonde de température (29) qui génère un signal de sortie électrique caractéristique de la température dans la chambre d'oxydation (24) de la torche (14) et que ce signal de sortie est amené à une unité de commande électronique (31) qui, à partir d'un traitement de ce signal dans le sens d'une conduite de processus définie, commandée par programme, génère des signaux de commande pour le dispositif de transport (16) pour l'amenée de l'agent de réaction dans la chambre de réaction (12) du four de déliantage (13) ainsi que pour l'arrêt de l'amenée d'agent de réaction V.

6. Installation selon la revendication 5, **caractérisée par le fait que** l'unité de commande électronique (31) effectue, par commande de l'amenée d'agent de réaction dans la chambre de réaction (12) du four de déliantage (13), une régulation de la température de la torche T_{f} à une valeur constante ou dans le sens de la poursuite d'un profil température/temps T_{f}(t) défini et amorce un arrêt commandé du processus de dépolymérisation lorsque l'afflux d'agent de réaction dépasse une valeur de réglage définie pour le maintien d'une valeur définie de la température de la torche.
